# EUROPEAN PATENT SPECIFICATION

(11) **EP 4 131 531 B1**
(45) Date of publication and mention of the grant of the patent: **27.08.2025**
(21) Application number: 21838705.8
(22) Date of filing: 05.07.2021
(51) Int. Cl.: H01M 10/04, H01M 10/058, H01M 50/116, H01M 4/04, H01M 50/543, H01M 50/30, H01M 50/317

(54) **METHOD FOR MANUFACTURING SECONDARY BATTERY AND APPARATUS FOR MANUFACTURING SECONDARY BATTERY**
VERFAHREN ZUR HERSTELLUNG EINER SEKUNDÄRBATTERIE UND VORRICHTUNG ZUR HERSTELLUNG EINER SEKUNDÄRBATTERIE
PROCÉDÉ DE FABRICATION DE BATTERIE SECONDAIRE ET APPAREIL DE DE FABRICATION DE BATTERIE SECONDAIRE

(30) Priority: 06.07.2020 KR 20200083106; 02.07.2021 KR 20210087119
(43) Date of publication of application: 08.02.2023
(73) Proprietor: LG Energy Solution, Ltd., Seoul 07335 (KR)
(72) Inventor: HONG, Suk Hyun, Daejeon 34122 (KR); LEE, Eui Kyung, Daejeon 34122 (KR); BAE, Joon Sung, Daejeon 34122 (KR); KIM, Sang Jih, Daejeon 34122 (KR); LEE, Beom Koon, Daejeon 34122 (KR); BAE, Dong Hun, Daejeon 34122 (KR)
(74) Representative: Plasseraud IP
(86) International application number: PCT/KR2021/008529
(87) International publication number: WO 2022/010210

(56) References cited:
- KR-A- 20150 043 754
- KR-A- 20170 063 222
- KR-A- 20180 056 131
- KR-A- 20180 056 131
- KR-A- 20180 091 255
- KR-B1- 101 602 466
- KR-B1- 101 602 466
- US-A1- 2018 226 673

## Description

### TECHNICAL FIELD

The present invention relates to a method for manufacturing a secondary battery and an apparatus for manufacturing a secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. The secondary battery accommodates an electrode assembly and an electrolyte. In such a secondary battery, an electrode assembly mounted in a battery case is a chargeable and dischargeable power generating device having a structure in which an electrode and a separator are stacked.

The electrode assembly may be approximately classified into a jelly roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

In an activation process in the process of manufacturing the secondary battery, a solid electrolyte interface (SEI layer) is generated through an electrochemical reaction between an electrode active material and an electrolyte, and as a result, an activation gas is generated as a by-product.

The generated activation gas is removed through a degassing process, but if the gas remains in a cell due to degassing defects, a gasp trap is generated. Thus, the gas trap causes a problem in which lithium precipitation occurs in a subsequent charging/discharging process.

[Prior Art Document] (Patent Document) Korean Patent Publication No. 10-2014-0015647

Documents KR 101602466 B1 and KR 2018/0056131 A1 relate to the degassing of battery cells.

### DISCLOSURE OF THE INVENTION

### TECHNICAL PROBLEM

One aspect of the present invention is to provide a method and apparatus for manufacturing a secondary battery, which are capable of effectively removing an internal gas.

### TECHNICAL SOLUTION

To this end, the invention relates to a method for manufacturing a secondary battery, according to claim 1.

The method after the invention may present one or more of the features of dependent claims 2 to 11, in any combination allowed by the claims.

The invention also relates to an apparatus for manufacturing a secondary battery, according to claim 12.

The apparatus after the invention may present one or more of the features of dependent claims 13 to 21, in any combination allowed by the claims.

### ADVANTAGEOUS EFFECTS

According to the present invention, the body of the pouch may be pressed through the pressing process. Here, the body of the pouch may be pressed through the pressing roll in the full-length direction of the cell, and thus, the internal gas of the electrode assembly accommodated in the body may be easily discharged to the outside of the electrode assembly.

In addition, when the portion except for the edge of the body is pressed through the pressing roll, the internal gas between the electrode and the separator at the central portion in the electrode assembly may be easily discharged to the outside of the electrode assembly through the edge of the electrode assembly. Therefore, the phenomenon in which the gas within the electrode assembly remains to form the gas trap may be prevented from occurring to prevent the lithium from being precipitated in the subsequent charge/discharge process. In addition, the edge of the electrode assembly, which are capable of being easily ruptured or damaged, may not be pressed to prevent the electrode assembly from being damaged due to the pressing process.

### BRIEF DESCRIPTION OF THE DRAWINGS

FIG. 1 is a plan view illustrating an accommodation process in a method for manufacturing a secondary battery according to an embodiment of the present invention.
FIG. 2 is a plan view illustrating an accommodation process in the method for manufacturing the secondary battery according to an embodiment of the present invention.
FIG. 3 is a perspective view illustrating a pressing process in the method for manufacturing the secondary battery according to an embodiment of the present invention.
FIG. 4 is a perspective view illustrating a pressing process in the method for manufacturing the secondary battery according to an embodiment of the present invention.
FIG. 5 is a front view illustrating a pressing process in the method for manufacturing the secondary battery according to an embodiment of the present invention.
FIG. 6 is a plan view illustrating a secondary battery in the method for manufacturing the secondary battery according to an embodiment of the present invention.
FIG. 7 is a front view illustrating a pressing process in a method for manufacturing a secondary battery according to another embodiment of the present invention.
FIG. 8 is a front view illustrating a pressing process in a method for manufacturing a secondary battery according to further another embodiment of the present invention.
FIG. 9 is a plan view illustrating a state in which a gas within a secondary battery manufactured through a method for manufacturing a secondary battery according to Manufacturing Example 1 of the present invention is removed.
FIG. 10 is a plan view illustrating a state in which a gas within a secondary battery manufactured through a method for manufacturing a secondary battery according to Comparative Example 1 of the present invention is removed.
FIG. 11 is a plan view illustrating a state in which a gas within a secondary battery manufactured through a method for manufacturing a secondary battery according to Comparative Example 2 of the present invention is removed.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. In the following description of the present invention, the detailed descriptions of related arts which may unnecessarily obscure the gist of the present invention will be omitted.

### Method for manufacturing secondary battery according to an embodiment

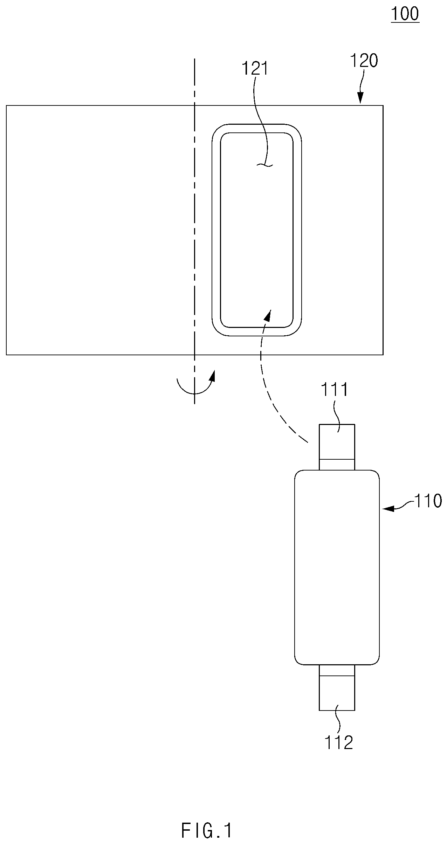

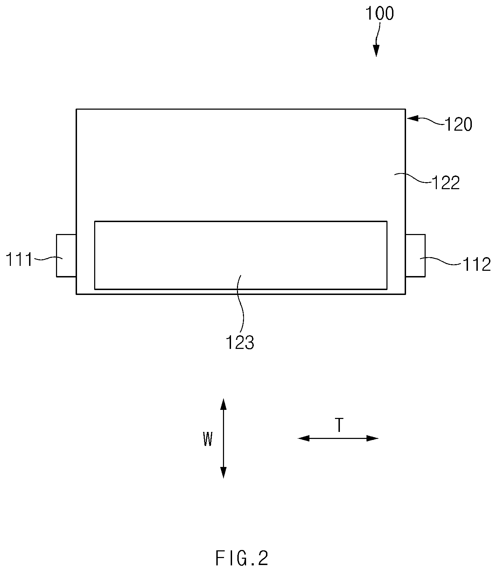

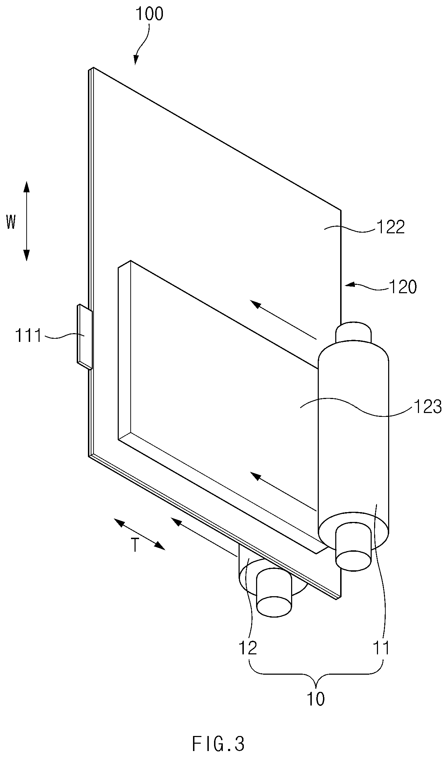

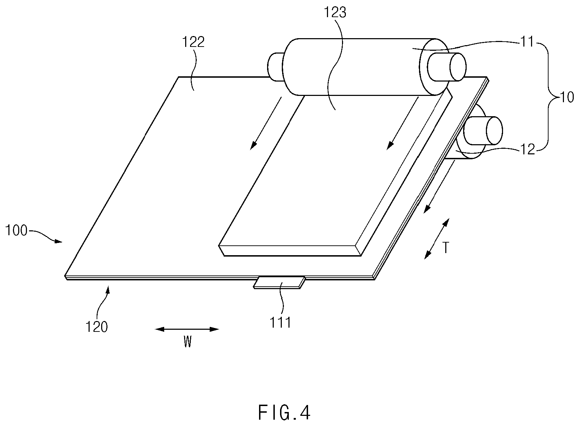

FIG. 1 is a plan view illustrating an accommodation process in a method for manufacturing a secondary battery according to an embodiment of the present invention, FIG. 2 is a plan view illustrating an accommodation process in the method for manufacturing the secondary battery according to an embodiment of the present invention, FIG. 3 is a perspective view illustrating a pressing process in the method for manufacturing the secondary battery according to an embodiment of the present invention, and FIG. 4 is a perspective view illustrating a pressing process in the method for manufacturing the secondary battery according to an embodiment of the present invention. Here, FIG. 4 is a perspective view when viewed in a direction different from that in FIG. 3.

Referring to FIGS. 1 to 4, a method for manufacturing a secondary battery according to an embodiment of the present invention comprises an accommodation process of accommodating an electrode assembly 110 in a pouch 120 to form a cell 100, an activation process of activating the cell 100, a pressing process of roll-pressing the cell 100, and a degassing process of discharging an internal gas of the cell 100. In addition, the method for manufacturing the secondary battery according to an embodiment of the present invention may further comprise an aging process of allowing the cell 100 to elapse for a predetermined time and a sealing process of sealing the pouch 120.

In more detail, referring to FIG. 1, the cell 100 comprises a pouch 120 and an electrode assembly 110 accommodated in an accommodation part 121 of the pouch 120. Here, the electrode assembly 110 may comprise electrode leads 111 and 112 electrically connected to electrodes.

The electrode assembly 110 may be a chargeable and dischargeable power generation element and be formed by alternately stacking electrodes and separators.

The electrodes may be constituted by a positive electrode and a negative electrode. At this time, the electrode assembly 110 may have a structure in which the positive electrode/separator/negative electrode are alternately stacked.

For example, in the plan view, the positive electrode may be formed to be larger than the negative electrode. Here, for example, the negative electrode may be formed to have a length and width, each of which is larger by 0.5 mm to 1.5 mm than each of those of the positive electrode. Here, more specifically, for example, the negative electrode may be formed to have a length and width, each of which is larger by about 2 mm than each of those of the positive electrode. That is, when the positive electrode, the separator, and the negative electrode are stacked, an end of the negative electrode in a lateral direction may further protrude by about 1 mm than an end of the positive electrode.

Also, the electrode leads 111 and 112 may comprise a positive electrode lead 111 connected to the positive electrode and a negative electrode lead 112 connected to the negative electrode.

The positive electrode may comprise a positive electrode collector and a positive electrode active material stacked on the positive electrode collector.

The positive electrode collector may be made of an aluminum foil.

The positive electrode active material may comprise lithium manganese oxide, lithium cobalt oxide, lithium nickel oxide, lithium iron phosphate, or a compound or mixture containing at least one of the above-described materials.

The negative electrode may comprise a negative electrode collector and a negative active material stacked on the negative electrode collector.

The negative electrode collector may be made of, for example, a foil made of a copper (Cu) material.

The negative active material may be a compound or a mixture containing a graphite-based material.

The separator is made of an insulating material to electrically insulates the positive electrode and the negative electrode from each other. Here, the separator may be made of a polyolefin-based resin film such as polyethylene or polypropylene having microporosity.

Referring to FIGS. 1 and 2, in the accommodation process, the electrode assembly 110, the electrolyte, and one side portion of each of the electrode leads 111 and 112 connected to the electrodes may be accommodated in the accommodation part 121 formed in the pouch 120 to form the cell 100.

In addition, in the accommodation process, the other side portion of each of the electrode leads 111 and 112 may be accommodated to protrude to the outside of the pouch 120.

Here, the pouch 120 comprises a body 123 in which the accommodation part 121, in which the electrode assembly 110 is accommodated, is formed, and a gas pocket part 122 extending from the accommodation part 121 to collect a gas generated in the accommodation part 121. In addition, the gas pocket part 122 may extend in a full-width direction W of the cell 100. Here, the full-width direction W of the cell 100 may be perpendicular to a full-length direction T, which is a protrusion direction of the electrode leads 111 and 112 in the plan view. In this case, the electrode assembly 110 may have, for example, a length greater than a width. That is, the electrode assembly 110 may be formed so that the length of the cell 100 in the full-length direction T is greater than the width in the full-width direction W of the cell 100.

In the activation process, the cell 100 is charged to be activated. Here, in the activation process, the cell 100 may be charged by connecting electricity to the electrode leads 111 and 112 of the cell 100.

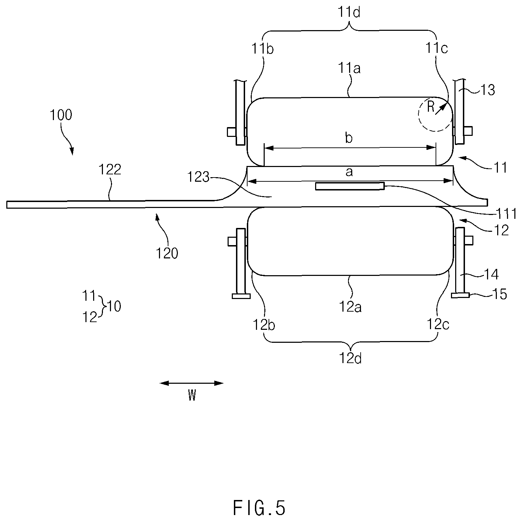

FIG. 5 is a front view illustrating a pressing process in the method for manufacturing the secondary battery according to an embodiment of the present invention.

Referring to FIGS. 4 to 5, in the pressing process, after the activation process, the cell 100 is sequentially pressed through pressing rolls 10 to perform a roll press.

In addition, in the pressing process, the cell 100 may be roll-pressed in the full-length direction T of the cell 100, which is the protrusion direction of the electrode leads 111 and 112.

In the pressing process, the body 123 of the pouch 120 is pressed.

In the pressing process, after disposing the cell 100 between the pair of pressing rolls 10, the pair of pressing rolls 10 may sequentially press both surfaces of the cell 100. Here, the pressing roll 10 may be in line contact with the cell 100. Thus, when the cell 100 is pressed through the pressing rolls 10 while being rolled, a linear pressure is sequentially applied to an outer surface of the cell 100. Thus, the gas disposed inside the electrode assembly 110 may be easily discharged to the outside of the electrode assembly 110.

Here, the pair of pressing rolls 10 may comprise a first roll 11 for pressing an upper portion of the cell 100 and a second roll 12 for pressing a lower portion of the cell 100. In addition, the first roll 11 and the second roll 12 may be supported by supports 13 and 14. At this time, in the pressing process, the support 13 supporting the first roll 11 may move vertically by a moving means, and thus, the upper portion of the cell 100 may be pressed through the first roll 11. Here, the moving means may be, for example, a pneumatic or hydraulic actuator.

In the pressing process, for example, a tab or the pouch 120 of the cell 100 may be held and fixed through a fixing means to press the cell 100 while the pressing roll 10 moves. In this case, the fixing means may be, for example, a fixing jig.

In addition, as another example of the pressing process, the cell 100 may be input between the pair of pressing rolls 10 so as to be pressed.

Furthermore, in the pressing process, the pair of pressing rolls 10 may be provided as one roll set, and also, one or more roll sets may be provided.

In the pressing process, the pair of pressing rolls 10 may be provided at a horizontal position.

In addition, in the pressing process, a gap between the pair of pressing rolls 10 may be adjusted. Here, in the pressing process, a distance between the pair of pressing rolls 10 may be maintained within a predetermined gap range.

Furthermore, in the pressing process, pressing force applied to the cell 100 through the pressing rolls 10 may be adjusted. Here, in the pressing process, the pressing force applied to the cell 100 may be maintained within a predetermined pressure range. At this time, the pressing process may be performed so that the pressing force of the pressing roll 10 for pressing the cell 100 ranges of 10 kgf to 150 kgf. In addition, a load pressed to the cell 100 may be detected through a load cell 15 provided on the support 14 supporting the pressing roll 10. Here, for example, the load cell 15 may be provided on the support 14 supporting the second roll 12 disposed below the cell 100.

In the pressing process, a portion except for an edge of the body 123 in the pouch 120 may be pressed in the full-width direction W of the cell 100.

In addition, in the pressing process, the pressing roll 10 may be formed to have a diameter of each of both side portions 11d and 12d, which is smaller than a diameter of each of central portions 11a and 12a.

In this case, in the pressing process, a length b of the central portion of the pressing roll 10 may be provided to be smaller than a width a of the body 123. That is, in the pressing process, the length b of the central portion of the pressing roll 10, which is parallel to the full-length direction T of the cell 100, may be provided to be smaller than the width a of the body 123 of the pouch 120, which is parallel to the full-length direction T of the cell 100 so that the portion except for the edge of the body 123 is pressed. At this time, the width a of the body 123 may be, for example, a width of a bottom surface of the accommodation part 121 in the pouch 110. Here, the width a of the body 123 in the pouch 110 may correspond to, for example, a width of the electrode assembly 110.

Here, both side portions 11d and 12d of the pressing roll 10 may comprise one side portion 11b disposed at one side in the full-width direction W of the cell 100 and the other side portion 11c disposed at the other side.

In addition, in the pressing process, each of both side portions 11d and 12d of the pressing roll 10 may be formed to have a diameter that is gradually smaller toward an end thereof.

Here, in the pressing process, an outer surface of each of both the side portions 11d and 12d of the pressing roll 10 may have a curvature that is rounded from each of the central portions 11a and 12a toward each of the ends. That is, in the pressing roller 10, the curvature may be formed at a corner of each of both the side portions 11d and 12d in the full-width direction W of the cell 100. Thus, in the electrode assembly 110 accommodated in the body 123, a central portion except for the edge in the full-length direction T of the cell 100 may be pressed by the central portions 11a and 12a of the pressing roll 10. Thus, the gas disposed in the central portion of the electrode assembly 110 may move to the edge of the electrode assembly 110 and then be discharged to the outside of the electrode assembly 110. Here, the gas discharged to the outside of the electrode assembly 110 may be disposed in the accommodation part 121 or the gas pocket part 122 inside the pouch 120 and then be discharged to the outside of the pouch 120 through the degassing process.

At this time, the rounded curvature formed on the outer surfaces of each of both the side portions 11d and 12d in the pressing roll 10 may be formed to have a curvature radius R of 5 mm to 50 mm.

Thus, the curvature radius R is formed to be 5 nm or more, which is a lower limit value to prevent press marks on the battery and also prevent the battery from being damaged by the edge of the pressing roll 10. In addition, since the curvature radius R is formed to be less than 50 mm or less, which is an upper limit value, and thus. the pressing effect for removing the gas at the outer shell of the battery may not be deteriorated.

In the aging process, after the activation process, the cell 100 may elapse for a predetermined time. Here, in the aging process, the cell 100 may elapse for a predetermined time at room temperature and a high temperature. In this case, the aging process may be performed before the degassing process.

The pressing process may be performed during the aging process.

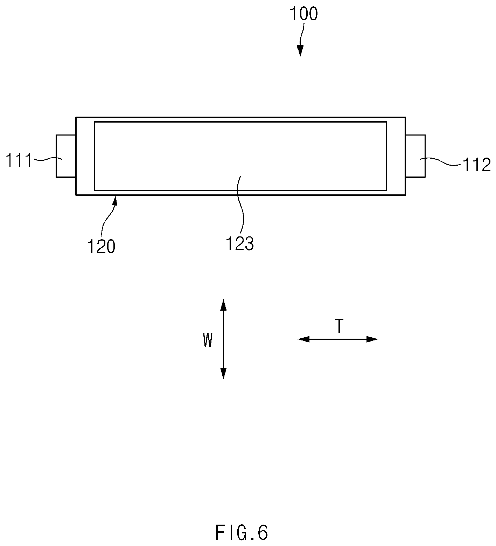

FIG. 6 is a plan view illustrating a secondary battery in the method for manufacturing the secondary battery according to an embodiment of the present invention.

Referring to FIG. 6, in the sealing process, after the degassing process, an outer circumferential surface of the pouch 120 may be sealed to manufacture a secondary battery 100'.

In this case, in the sealing process, the gas pocket part 122 may be cut to be removed, and then, the removed portion may be sealed through thermal fusion to seal the pouch 120.

Referring to FIGS. 1 and 4, in the method for manufacturing the secondary battery according to an embodiment of the present invention, which is configured as described above, the body 123 of the pouch 120 may be pressed through the pressing process Here, the body 123 may be pressed through the pressing rolls 10 in the full-length direction T of the cell 100 to easily discharge the internal gas of the electrode assembly 110 accommodated in the body 123 to the outside of the electrode assembly 110.

Here, when the portion except for the edge of the body 123 is pressed through the pressing rolls 10, the central portion of the electrode assembly 110 accommodated in the body 123 may be pressed, and thus, the internal gas between the electrode and the separator at the central portion in the electrode assembly 110 may be easily discharged to the outside of the electrode assembly 110 through the edge of the electrode assembly 110. Therefore, the phenomenon in which the gas within the electrode assembly 110 remains to form the gas trap may be prevented from occurring to prevent the lithium from being precipitated in the subsequent charge/discharge process. In addition, the edge of the electrode assembly 110, which are capable of being easily ruptured or damaged, may not be pressed to prevent the electrode assembly 110 from being damaged due to the pressing process.

### Method for manufacturing secondary battery according to another embodiment

Hereinafter, a method for manufacturing a secondary battery according to another embodiment of the present invention will be described.

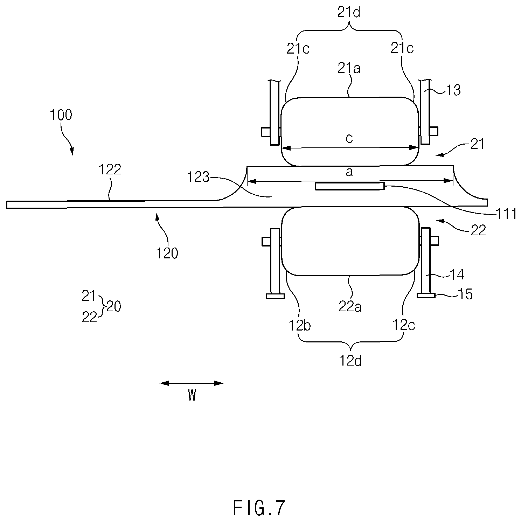

FIG. 7 is a front view illustrating a pressing process in a method for manufacturing a secondary battery according to another embodiment of the present invention.

Referring to FIGS. 1, 2, and 7, a method for manufacturing a secondary battery according to another embodiment of the present invention comprises an accommodation process of accommodating an electrode assembly 110 in a pouch 120 to form a cell 100, an activation process of activating the cell 100, a pressing process of roll-pressing the cell 100, and a degassing process of discharging an internal gas of the cell 100.

In addition, the method for manufacturing the secondary battery according to another embodiment of the present invention may further comprise an aging process of allowing the cell 100 to elapse for a predetermined time and a sealing process of sealing the pouch 120.

The method for manufacturing the secondary battery according to another embodiment of the present invention is different from the method for manufacturing the secondary battery according to the foregoing embodiment of the present invention in embodiment of a pressing process. Thus, contents of this embodiment, which are duplicated with those according to the forgoing embodiment, will be omitted or briefly described, and also, differences therebetween will be mainly described.

In more detail, in the method for manufacturing the secondary battery according to another embodiment of the present invention, in an accommodation process, an electrode assembly 110, an electrolyte, and one side portion of each of the electrode leads 111 and 112 connected to the electrodes may be accommodated in an accommodation part 121 formed in a pouch 120 to form a cell 100.

In addition, in the accommodation process, the other side portion of each of the electrode leads 111 and 112 may be accommodated to protrude to the outside of the pouch 120.

Here, the pouch 120 may comprise a body 123 in which the accommodation part 121, in which the electrode assembly 110 is accommodated, is formed, and a gas pocket part 122 extending from the accommodation part 121 to collect a gas generated in the accommodation part 121. In addition, the gas pocket part 122 may extend in a full-width direction W of the cell 100.

In the pressing process, after the activation process, the cell 100 is sequentially pressed through pressing rolls 20 to perform a roll press.

In addition, in the pressing process, the cell 100 may be roll-pressed in a full-length direction T of the cell 100, which is the protrusion direction of the electrode leads 111 and 112. Here, in the pressing process, the body 123 of the pouch 120 may be pressed.

Furthermore, in the pressing process, after disposing the cell 100 between the pair of pressing rolls 20, the pair of pressing rolls 20 may sequentially press both surfaces of the cell 100. Here, the pressing roll 20 may be in line contact with the cell 100. Thus, when the cell 100 is pressed through the pressing rolls 20 while being rolled, a linear pressure is sequentially applied to an outer surface of the cell 100. Thus, the gas disposed inside the electrode assembly 110 may be easily discharged to the outside of the electrode assembly 110. Here, the pair of pressing rolls 20 may comprise a first roll 21 for pressing an upper portion of the cell 100 and a second roll 22 for pressing a lower portion of the cell 100.

In the pressing process, the pair of pressing rolls 20 may be provided at a horizontal position.

Also, in the pressing process, a portion except for an edge of the body 123 in the pouch 120 may be pressed in the full-width direction W.

In addition, in the pressing process, a length c of the pressing roll 20 may be provided to be smaller than a width a of the body 123.

That is, in the pressing process, the length c of the pressing roll 20, which is parallel to the full-length direction T of the cell 100, may be provided to be smaller than the width a of the body 123 in the pouch 120, which is parallel to the full-length direction T of the cell 100 so that the portion except for the edge of the body 123 is pressed.

Thus, in the electrode assembly 110 accommodated in the body 123, a central portion except for the edge in the full-length direction T of the cell 100 may be pressed by the pressing roll 20. Thus, the gas disposed in the central portion of the electrode assembly 110 may move to the edge of the electrode assembly 110 and then be discharged to the outside of the electrode assembly 110.

The length c of the pressing roll 20 may be formed, for example, to be smaller by 2 mm to 10 mm than the width a of the body 123 in the pouch 120.

Thus, the length c of the pressing roll 20 may be formed to be smaller by 2 mm or more, which is a lower limit value, than the width a of the body 123 to prevent an outer shell of the electrode assembly 110 from being damaged. That is, when the electrode assembly 100 in which a negative electrode is formed to be larger than a positive electrode is pressed in a stacking direction, the negative electrode may be prevented from being damaged by an edge of the positive electrode. In addition, the length c of the pressing roll 20 may be formed to be smaller by 10 mm or less, which an upper limit value, than the width a of the body 123 to prevent a gas removal effect at an outer shell-side of the battery from being deteriorated.

### Method for manufacturing secondary battery according to further another embodiment

Hereinafter, a method for manufacturing a secondary battery according to further another embodiment of the present invention will be described.

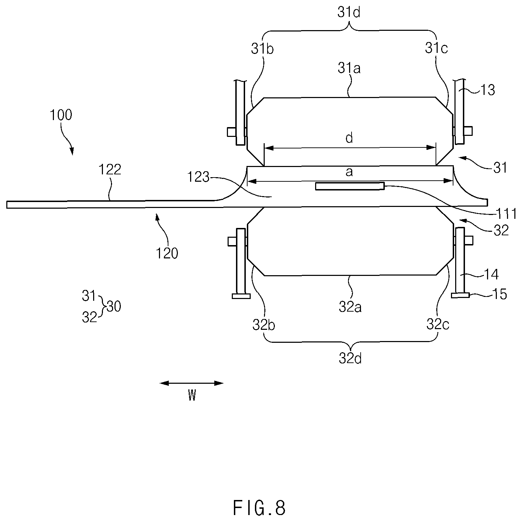

FIG. 8 is a front view illustrating a pressing process in a method for manufacturing a secondary battery according to further another embodiment of the present invention.

Referring to FIGS. 1 to 8, a method for manufacturing a secondary battery according to further another embodiment of the present invention comprises an accommodation process of accommodating an electrode assembly 110 in a pouch 120 to form a cell 100, an activation process of activating the cell 100, a pressing process of roll-pressing the cell 100, and a degassing process of discharging an internal gas of the cell 100.

In addition, the method for manufacturing the secondary battery according to further another embodiment of the present invention may further comprise an aging process of allowing the cell 100 to elapse for a predetermined time and a sealing process of sealing the pouch 120.

The method for manufacturing the secondary battery according to further another embodiment of the present invention is different from the method for manufacturing the secondary battery according to the foregoing embodiments of the present invention in embodiment of a pressing process. Thus, contents of this embodiment, which are duplicated with those according to the forgoing embodiment, will be omitted or briefly described, and also, differences therebetween will be mainly described.

In more detail, in the method for manufacturing the secondary battery according to further embodiment of the present invention, in the accommodation process, the electrode assembly 110, the electrolyte, and one side portion of each of electrode leads 111 and 112 connected to electrodes may be accommodated in an accommodation part 121 formed in the pouch 120 to form the cell 100.

In addition, in the accommodation process, the other side portion of each of the electrode leads 111 and 112 may be accommodated to protrude to the outside of the pouch 120.

Here, the pouch 120 may comprise a body 123 in which the accommodation part 121, in which the electrode assembly 110 is accommodated, is formed, and a gas pocket part 122 extending from the accommodation part 121 to collect a gas generated in the accommodation part 121. In addition, the gas pocket part 122 may extend in a full-width direction W of the cell 100.

In the pressing process, after the activation process, the cell 100 is sequentially pressed through pressing rolls 30 to perform a roll press.

In addition, in the pressing process, the cell 100 may be roll-pressed in a full-length direction T of the cell 100, which is the protrusion direction of the electrode leads 111 and 112. Here, in the pressing process, the body 123 of the pouch 120 may be pressed.

Furthermore, in the pressing process, after disposing the cell 100 between the pair of pressing rolls 30, the pair of pressing rolls 30 may sequentially press both surfaces of the cell 100. Here, the pressing roll 30 may be in line contact with the cell 100. Thus, when the cell 100 is pressed through the pressing rolls 30 while being rolled, a linear pressure is sequentially applied to an outer surface of the cell 100. Thus, the gas disposed inside the electrode assembly 110 may be easily discharged to the outside of the electrode assembly 110. Here, the pair of pressing rolls 30 may comprise a first roll 31 for pressing an upper portion of the cell 100 and a second roll 32 for pressing a lower portion of the cell 100.

In addition, in the pressing process, the pair of pressing rolls 30 may be provided at a horizontal position.

Also, in the pressing process, a portion except for an edge of the body 123 in the pouch 120 may be pressed in the full-width direction W.

In addition, in the pressing process, each of both side portions 31d and 32d of the pressing roll 30 may be formed to have a diameter that is gradually smaller toward an end thereof. Here, both side portions 31d and 32d of the pressing roll 30 may comprise one side portion 31b disposed at one side in the full-width direction W of the cell 100 and the other side portion 31c disposed at the other side. In this case, in the pressing process, a length d of each of central portions 31a and 32a of the pressing roll 30 may be provided to be smaller than a width a of the body 123.

Furthermore, in the pressing process, each of both the side portions 31d and 32d of the pressing roll 30 may be chamfered. That is, in the pressing process, a corner of an outer circumferential surface of each of both the side portions 31d and 32d of the pressing roll 30 may be formed to have an inclined surface having a diameter that is gradually smaller toward an end thereof.

Thus, in the electrode assembly 110 accommodated in the body 123, a central portion except for the edge in the full-length direction T of the cell 100 may be pressed by the pressing roll 30. Thus, the gas disposed in the central portion of the electrode assembly 110 may move to the edge of the electrode assembly 110 and then be discharged to the outside of the electrode assembly 110.

### Apparatus for manufacturing secondary battery according to an embodiment

Hereinafter, an apparatus for manufacturing a secondary battery according to an embodiment of the present invention will be described.

Referring to FIGS. 1 and 4, an apparatus for manufacturing a secondary battery according to an embodiment of the present invention comprises a pressing roll 10 pressing a cell 100, in which an electrode assembly 110 and an electrolyte are accommodated in a pouch 120, and a support supporting the pressing roll 10. The pressing roll 10 performs roll press on the cell 10 in a full-length direction T of the cell 100 to manufacture a secondary battery.

The apparatus for manufacturing the rechargeable battery according to an embodiment of the present invention relates to an apparatus for manufacturing a secondary battery that is applied to the method for manufacturing the secondary battery according to the foregoing embodiment. Thus, contents according to this embodiment, which are duplicated with the method for manufacturing the secondary battery according to the foregoing embodiment, will be omitted or briefly described, and also, differences therebetween will be mainly described.

In more detail, the pressing roll 10 may sequentially press the cell 100, in which the electrode assembly 110 and the electrolyte are accommodated in the pouch 120, before a degassing process after an activation process to perform roll press.

Here, in the electrode assembly 110, electrodes and separators may be alternately stacked on each other.

One side portion of each of electrode leads 111 and 112 connected to the electrodes may be accommodated in the pouch 120, and the other side may protrude to the outside of the pouch 120. At this time, the pressing roll 10 may perform the roll press in a full-length direction T of the cell 100 which is a protrusion direction of the electrode leads 111 and 112.

Also, the pouch 120 may comprise a body 123 in which the accommodation part 121, in which the electrode assembly 110 is accommodated, is formed, and a gas pocket part 122 extending from the accommodation part 121 to collect a gas generated in the accommodation part 121. In addition, the gas pocket part 122 may extend in a full-width direction W of the cell 100. Here, the full-width direction W of the cell 100 may be perpendicular to a full-length direction T, which is a protrusion direction of the electrode leads 111 and 112 in the plan view.

Also, the pressing roll 10 may be provided in a pair. After disposing the cell 100 between the pair of pressing rolls 10, the pair of pressing rolls 10 may sequentially press both surfaces of the cell 100. Here, the pressing roll 10 may be in line contact with the cell 100. Thus, when the cell 100 is pressed through the pressing rolls 10 while being rolled, a linear pressure is sequentially applied to an outer surface of the cell 100. Thus, the gas disposed inside the electrode assembly 110 may be easily discharged to the outside of the electrode assembly 110.

Here, the pair of pressing rolls 10 may comprise a first roll 11 for pressing an upper portion of the cell 100 and a second roll 12 for pressing a lower portion of the cell 100.

The pressing roll 10 may press a portion except for an edge of the body 123 in the pouch 120 in the full-width direction W of the cell 100. For this, the pressing roll 10 may be formed to have a diameter of each of both side portions 11d and 12d, which is smaller than a diameter of each of central portions 11a and 12a.

Here, a length b of the central portion of the pressing roll 10 may be provided to be smaller than a width a of the body 123. That is, the length b of the central portion of the pressing roll 10, which is parallel to the full-length direction T of the cell 100, may be provided to be smaller than the width a of the body 123 of the pouch 120, which is parallel to the full-length direction T of the cell 100 so that the portion except for the edge of the body 123 is pressed.

Here, both side portions 11d and 12d of the pressing roll 10 may comprise one side portion 11b disposed at one side in the full-width direction W of the cell 100 and the other side portion 11c disposed at the other side.

In addition, each of both the side portions 11d and 12d of the pressing roll 10 may be formed to have a gradually smaller diameter toward an end thereof.

Thus, in the electrode assembly 110 accommodated in the body 123, a central portion except for the edge in the full-length direction T of the cell 100 may be pressed by the central portions 11a and 12a of the pressing roll 10. Thus, the gas disposed in the central portion of the electrode assembly 110 may move to the edge of the electrode assembly 110 and then be discharged to the outside of the electrode assembly 110. Here, the gas discharged to the outside of the electrode assembly 110 may be disposed in the accommodation part 121 or the gas pocket part 122 inside the pouch 120 and then be discharged to the outside of the pouch 120 through the degassing process. Here, an outer surface of each of both the side portions 11d and 12d of the pressing roll 10 may have a curvature that is rounded from each of the central portions 11a and 12a toward each of the ends. That is, in the pressing roller 10, the curvature may be formed at a corner of each of both the side portions 11d and 12d in the full-width direction W of the cell 100.

Thus, in the electrode assembly 110 accommodated in the body 123, a central portion except for the edge in the full-length direction T of the cell 100 may be pressed by the central portions 11a and 12a of the pressing roll 10. Thus, the gas disposed in the central portion of the electrode assembly 110 may move to the edge of the electrode assembly 110 and then be discharged to the outside of the electrode assembly 110. Here, the gas discharged to the outside of the electrode assembly 110 may be disposed in the accommodation part 121 or the gas pocket part 122 inside the pouch 120 and then be discharged to the outside of the pouch 120 through the degassing process.

At this time, the rounded curvature formed on the outer surfaces of each of both the side portions 11d and 12d in the pressing roll 10 may be formed to have a curvature radius R of 5 mm to 50 mm.

Thus, the curvature radius R is formed to be 5 nm or more, which is a lower limit value to prevent press marks on the battery and also prevent the battery from being damaged by the edge of the pressing roll 10. In addition, since the curvature radius R is formed to be less than 50 mm or less, which is an upper limit value, and thus. the pressing effect for removing the gas at the outer shell of the battery may not be deteriorated.

The supports 13 and 14 may support the pressing rolls 10. In addition, the supports 13 and 14 may support a first roll 11 and a second roll 12 of the pressing roll 10, respectively. At this time, the support 13 supporting the first roll 11 may move vertically by a moving means, and thus, the upper portion of the cell 100 may be pressed through the first roll 11. Here, the moving means may be, for example, a pneumatic or hydraulic actuator.

A load cell 15 may be provided on each of the supports 13 and 14 to detect a load pressed to the cell 100. Here, for example, the load cell 15 may be provided on the support 14 supporting the second roll 12 disposed below the cell 100.

### Apparatus for manufacturing secondary battery according to another embodiment

Hereinafter, an apparatus for manufacturing a secondary battery according to another embodiment of the present invention will be described.

Referring to FIGS. 1, 2, and 7, an apparatus for manufacturing a secondary battery according to another embodiment of the present invention comprises a pressing roll 20 pressing a cell 100, in which an electrode assembly 110 and an electrolyte are accommodated in a pouch 120, and a support supporting the pressing roll 20. The pressing roll 20 performs roll press on the cell 10 in a full-length direction T of the cell 100 to manufacture a secondary battery.

The apparatus for manufacturing the electrode assembly according to another embodiment of the present invention is different from the apparatus for manufacturing the electrode assembly according to the foregoing embodiment of the present invention in configuration of the pressing roll 20. Thus, contents of this embodiment, which are duplicated with those according to the forgoing embodiment, will be omitted or briefly described, and also, differences therebetween will be mainly described.

In more detail, in the apparatus for manufacturing the secondary battery according to another embodiment of the present invention, the pressing roll 20 may sequentially press the cell 100, in which the electrode assembly 110 and the electrolyte are accommodated in the pouch 120, before a degassing process after an activation process to perform roll press.

Here, in the electrode assembly 110, electrodes and separators may be alternately stacked on each other.

One side portion of each of electrode leads 111 and 112 connected to the electrodes may be accommodated in the pouch 120, and the other side may protrude to the outside of the pouch 120. At this time, the pressing roll 20 may perform the roll press in a full-length direction T of the cell 100 which is a protrusion direction of the electrode leads 111 and 112.

Also, the pouch 120 may comprise a body 123 in which the accommodation part 121, in which the electrode assembly 110 is accommodated, is formed, and a gas pocket part 122 extending from the accommodation part 121 to collect a gas generated in the accommodation part 121. In addition, the gas pocket part 122 may extend in a full-width direction W of the cell 100. Here, the full-width direction W of the cell 100 may be perpendicular to a full-length direction T, which is a protrusion direction of the electrode leads 111 and 112 in the plan view.

Also, the pressing roll 20 may be provided in a pair. After disposing the cell 100 between the pair of pressing rolls 20, the pair of pressing rolls 10 may sequentially press both surfaces of the cell 100. Here, the pressing roll 20 may be in line contact with the cell 100. Thus, when the cell 100 is pressed through the pressing rolls 20 while being rolled, a linear pressure is sequentially applied to an outer surface of the cell 100. Thus, the gas disposed inside the electrode assembly 110 may be easily discharged to the outside of the electrode assembly 110.

Here, the pair of pressing rolls 20 may comprise a first roll 11 for pressing an upper portion of the cell 100 and a second roll 12 for pressing a lower portion of the cell 100.

The pressing roll 20 may press a portion except for an edge of the body 123 in the pouch 120 in the full-width direction W of the cell 100.

Also, a length c of the pressing roll 20 may be provided to be smaller than a width a of the body 123.

That is, the length c of the pressing roll 20, which is parallel to the full-length direction T of the cell 100, may be provided to be smaller than the width a of the body 123 of the pouch 120, which is parallel to the full-length direction T of the cell 100 so that the portion except for the edge of the body 123 is pressed.

Thus, in the electrode assembly 110 accommodated in the body 123, a central portion except for the edge in the full-length direction T of the cell 100 may be pressed by the pressing roll 20. Thus, the gas disposed in the central portion of the electrode assembly 110 may move to the edge of the electrode assembly 110 and then be discharged to the outside of the electrode assembly 110.

The length c of the pressing roll 20 may be formed, for example, to be smaller by 2 mm to 10 mm than the width a of the body 123 in the pouch 120.

Thus, the length c of the pressing roll 20 may be formed to be smaller by 2 mm or more, which is a lower limit value, than the width a of the body 123 to prevent an outer shell of the electrode assembly 110 from being damaged. When the electrode assembly 100 in which a negative electrode is formed to be larger than a positive electrode is pressed in a stacking direction, the negative electrode may be prevented from being damaged by an edge of the positive electrode. In addition, the length c of the pressing roll 20 may be formed to be smaller by 10 mm or less, which an upper limit value, than the width a of the body 123 to prevent a gas removal effect at an outer shell-side of the battery from being deteriorated.

The supports 13 and 14 may support the pressing rolls 20. In addition, the supports 13 and 14 may support a first roll 21 and a second roll 22 of the pressing roll 20, respectively. At this time, the support 13 supporting the first roll 21 may move vertically by a moving means, and thus, the upper portion of the cell 100 may be pressed through the first roll 21.

### Apparatus for manufacturing secondary battery according to further another embodiment

Hereinafter, an apparatus for manufacturing a secondary battery according to further another embodiment of the present invention will be described.

Referring to FIGS. 1, 2, and 8, an apparatus for manufacturing a secondary battery according to further another embodiment of the present invention comprises a pressing roll 30 pressing a cell 100, in which an electrode assembly 110 and an electrolyte are accommodated in a pouch 120, and a support supporting the pressing roll 30. The pressing roll 30 performs roll press on the cell 10 in a full-length direction T of the cell 100 to manufacture a secondary battery.

The secondary battery 300 according to further another embodiment of the present invention is different from the secondary batteries according to the foregoing embodiments in configuration of the pressing roll 30. Thus, contents of this embodiment, which are duplicated with those according to the forgoing embodiment, will be omitted or briefly described, and also, differences therebetween will be mainly described.

In more detail, in the apparatus for manufacturing the secondary battery according to further another embodiment of the present invention, the pressing roll 30 may sequentially press the cell 10, in which the electrode assembly 110 and the electrolyte are accommodated in the pouch 120, before a degassing process after an activation process to perform roll press.

Here, in the electrode assembly 110, electrodes and separators may be alternately stacked on each other.

One side portion of each of electrode leads 111 and 112 connected to the electrodes may be accommodated in the pouch 120, and the other side may protrude to the outside of the pouch 120. At this time, the pressing roll 30 may perform the roll press in a full-length direction T of the cell 100 which is a protrusion direction of the electrode leads 111 and 112.

Also, the pouch 120 may comprise a body 123 in which the accommodation part 121, in which the electrode assembly 110 is accommodated, is formed, and a gas pocket part 122 extending from the accommodation part 121 to collect a gas generated in the accommodation part 121. In addition, the gas pocket part 122 may extend in a full-width direction W of the cell 100. Here, the full-width direction W of the cell 100 may be perpendicular to a full-length direction T, which is a protrusion direction of the electrode leads 111 and 112 in the plan view.

Also, the pressing roll 30 may be provided in a pair. After disposing the cell 100 between the pair of pressing rolls 30, the pair of pressing rolls 10 may sequentially press both surfaces of the cell 100. Here, the pressing roll 30 may be in line contact with the cell 100. Thus, when the cell 100 is pressed through the pressing rolls 30 while being rolled, a linear pressure is sequentially applied to an outer surface of the cell 100. Thus, the gas disposed inside the electrode assembly 110 may be easily discharged to the outside of the electrode assembly 110.

Here, the pair of pressing rolls 30 may comprise a first roll 31 for pressing an upper portion of the cell 100 and a second roll 32 for pressing a lower portion of the cell 100.

The pressing roll 30 may press a portion except for an edge of the body 123 in the pouch 120 in the full-width direction W of the cell 100.

In addition, each of both side portions 31d and 32d of the pressing roll 30 may be formed to have a diameter that is gradually smaller toward an end thereof. Here, both side portions 31d and 32d of the pressing roll 30 may comprise one side portion 31b disposed at one side in the full-width direction W of the cell 100 and the other side portion 31c disposed at the other side. At this time, a length d of each of central portions 31a and 32a of the pressing roll 30 may be provided to be smaller than a width a of the body 123. Here, the length d of each of the central portions 31a and 32a of the pressure roll 30 corresponding to a pressing length for pressing the body 123 of the pressure roll 30 may be formed, for example, to be smaller by 2 mm to 10 mm than the width a of the body 123 in the pouch 120. Furthermore, each of both the side portions 31d and 32d of the pressing roll 30 may be chamfered. That is, a corner of an outer circumferential surface of each of both the side portions 31d and 32d of the pressing roll 30 may be formed to have an inclined surface having a diameter that is gradually smaller toward an end thereof.

Thus, in the electrode assembly 110 accommodated in the body 123, a central portion except for the edge in the full-length direction T of the cell 100 may be pressed by the pressing roll 30. Thus, the gas disposed in the central portion of the electrode assembly 110 may move to the edge of the electrode assembly 110 and then be discharged to the outside of the electrode assembly 110.

The supports 13 and 14 may support the pressing rolls 30. In addition, the supports 13 and 14 may support a first roll 31 and a second roll 32 of the pressing roll 30, respectively. At this time, the support 13 supporting the first roll 31 may move vertically by a moving means, and thus, the upper portion of the cell 100 may be pressed through the first roll 31.

### <Manufacturing Example 1>

An accommodation process of accommodating an electrode assembly, in which electrodes and separators are alternately stacked, an electrolyte, and one side portion of an electrode lead connected to the electrode, in a pouch to form a cell, an activation process of charging the cell to activate the cell, and a pressing process of sequentially pressing the cell through a pressing roll after the activation process to press the cell were performed to manufacture a secondary battery. Here, in the accommodation process, the other side portion of the electrode lead was accommodated to protrude to the outside of the pouch, and in the pressing process, roll press was performed in a full-length direction of the cell, which is a protrusion direction of the electrode lead.

### <Comparative Example 1>

The same process as in Manufacturing Example 1 except that the roll press is performed in a full-width direction of the cell was performed in the pressing process.

### <Comparative Example 2>

The same process as in Manufacturing Example 1 except that the pressing process is performed after a degassing process was performed.

### <Experimental Example 1>

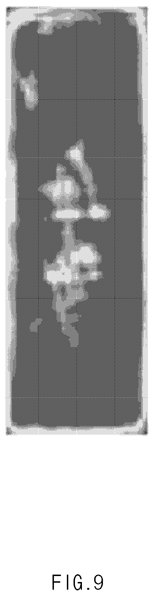

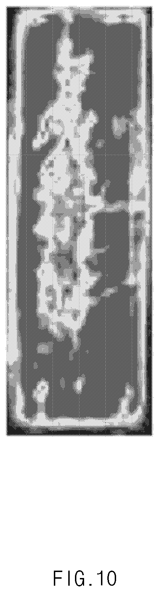

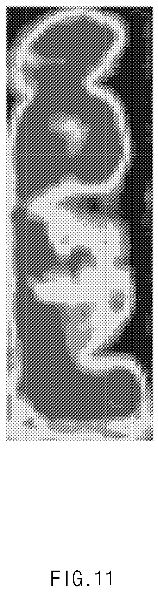

FIG. 9 is a plan view illustrating a state in which a gas within a secondary battery manufactured through a method for manufacturing a secondary battery according to Manufacturing Example 1 of the present invention is removed, FIG. 10 is a plan view illustrating a state in which a gas within a secondary battery manufactured through a method for manufacturing a secondary battery according to Comparative Example 1 of the present invention is removed, and FIG. 11 is a plan view illustrating a state in which a gas within a secondary battery manufactured through a method for manufacturing a secondary battery according to Comparative Example 2 of the present invention is removed.

Ultrasonic waves were applied to the secondary battery to measure a residual amount of gas inside the secondary battery through a degree of ultrasonic transmission.

In FIGS. 9 to 11, a region displayed with a red color is an ultrasonic transmission region, and a region displayed with a blue color is an ultrasonic non-transmission region. That is, the region through which the ultrasonic waves are transmittable is a region from which a gas is removed, and the region through which the ultrasonic waves are not transmittable is a region in which an internal gas is disposed.

Referring to FIG. 9, in the case of Manufacturing Example 1, a ratio of the ultrasonic non-transmission region was 2.7%, and referring to FIG. 10, a ratio of the ultrasonic non-transmission region in Comparative Example 1 was 17.2%, and referring to FIG. 11, a ratio of the ultrasonic non-transmission region in Comparative Example 2 was 44.8%.

Therefore, it is seen that, in the case of Manufacturing Example 1, a ratio of the ultrasonic non-transmission region is 2.7%, and thus, only a very small amount of internal gas is present, whereas in the case of Comparative Example 1, a ratio of the ultrasonic non-transmission region is 17.2%, and thus, a significant amount of internal gas is present, and in the case of Comparative Example 2, a ratio of the ultrasonic non-transmission region is 44.8%, and thus, a significant amount of internal gas is present.

As a result, it is seen that, in the technology of performing the rolling and pressing in the full-length direction of the cell according to Manufacturing Example 1, a residual amount of internal gas is remarkably reduced when compared to the technology of performing the rolling in the full-width direction of the cell according to Comparative Example 1.

In addition, it is seen that, in the technology of performing the rolling and pressing in the full-length direction of the cell before the degassing process according to Manufacturing Example 1, a significant residual amount of internal gas is remarkably reduced when compared to the technology of performing the rolling in the full-length direction of the cell after the degassing process according to Comparative Example 2.

## Claims

1. A method for manufacturing a secondary battery, the method comprising:
an accommodation process of accommodating an electrode assembly (110), in which electrodes and separators are alternately stacked, an electrolyte, and one side portion of electrode leads (111, 112) connected to the electrodes, in a pouch (120) to form a cell (100);
an activation process of charging the cell (100) to activate the cell (100);
a pressing process of sequentially pressing the cell (100) through pressing rolls (10, 20, 30) after the activation process to roll press the cell (100); and
a degassing process of discharging an internal gas of the cell (100) to the outside after the pressing process,
**characterized in that**, in the pressing process, a body (123) of the pouch (120), in which the electrode assembly (110) is accommodated, is pressed so that a portion except for an edge of the body (123) is pressed.

2. The method of claim 1, wherein the pouch (120) comprises:
the body (123) in which an accommodation part (121), in which the electrode assembly (110) is accommodated, is formed; and
a gas pocket part (122) extending from the accommodation part (121) to collect a gas generated in the accommodation part (121),
wherein the other side portion of each of the electrode leads (111, 112) is accommodated to protrude to the outside of the pouch (120), and the gas pocket part (122) extends in a full-width direction (W) of the cell (100), which is perpendicular to the protrusion direction of the electrode lead (111, 112).

3. The method of claim 2, wherein, in the pressing process, after the cell (100) is disposed between the pair of pressing rolls (10, 20, 30), the pair of pressing rolls (10, 20, 30) sequentially press both surfaces of the cell (100).

4. The method of claim 2, wherein, in the accommodation process, the other side portion of the electrode lead (111, 112) is accommodated to protrude to the outside of the pouch (120), and
in the pressing process, roll press is performed in a full-length direction (T) of the cell (100), which is the protrusion direction of the electrode lead (111, 112).

5. The method of claim 4, wherein, in the pressing process, the pressing is performed except for the edge of the body (120) in the full-width direction (W) of the cell (100).

6. The method of claim 5, wherein, in the pressing process, each of the pressing roll (10, 20, 30) is formed so that a diameter of each of both side portions (11b, 12b, 31b, 32b) thereof is smaller than a diameter of a central portion (11a, 12a, 31a, 32a) thereof.

7. The method of claim 6, wherein, in the pressing process, each of both the side portions (11b, 12b, 31b, 32b) of the pressing roll (10, 20, 30) is formed to have a diameter that is gradually smaller toward an end thereof.

8. The method of claim 7, wherein, in the pressing process, an outer surface of each of both the side portions (11b, 12b, 31b, 32b) of the pressing roll (10, 20, 30) has a curvature that is rounded from the central portion (11a, 12a, 31a, 32a) toward the end.

9. The method of claim 5, wherein, in the pressing process, a length of the pressing roll (10, 20, 30) is provided to be smaller than a width of the body (123).

10. The method of claim 5, wherein, in the pressing process, each of both side portions (11b, 12b, 31b, 32b) of the pressing roll (10, 20, 30) is chamfered.

11. The method of claim 1, further comprising an aging process of allowing the cell (100) to elapse for a predetermined time,
wherein the pressing process is performed during the aging process.

12. An apparatus for manufacturing a secondary battery, the apparatus comprising:
a pressing roll (10, 20, 30) configured to sequentially roll-press a cell (100), in which an electrode assembly (110), in which electrodes and separators are alternately stacked, and an electrolyte are accommodated in a pouch (120) before a degassing process after an activation process in a process of manufacturing the secondary battery; and
a support (13, 14) configured to support the pressing roll (10, 20, 30),
wherein the pressing roll (10, 20, 30) presses a body (123) of the pouch (12à), in which the electrode assembly (110) is accommodated, so that a portion except for an edge of the body (123) is pressed.

13. The apparatus of claim 12, wherein the pouch (120) comprises:
the body (123) in which an accommodation part (121), in which the electrode assembly (110) is accommodated, is formed; and
a gas pocket part (122) extending from the accommodation part (121) to collect a gas generated in the accommodation part (121),
wherein the electrode assembly (110) further comprises an electrode lead (111, 112) having one side portion connected to each of the electrodes and the other side portion protruding to the outside of the pouch (120), and
the gas pocket part (122) extends in a full-width direction (W) of the cell (100), which is perpendicular to an protrusion direction of the electrode lead (111, 112).

14. The apparatus of claim 13, wherein the pressing roll (10, 20, 30) is provided in a pair, and
after the cell (100) is disposed between the pair of pressing rolls (10, 20, 30), both surfaces of the cells (100) are sequentially pressed.

15. The apparatus of claim 13, wherein the pressing roll (10, 20, 30) roll-presses the cell (100) in a full-length direction (T) of the cell (100), which the protrusion direction of the electrode lead (111, 112).

16. The apparatus of claim 15, wherein, in the pressing roll (10, 20, 30), a diameter of each of both side portions (11b, 12b, 31b, 32b) thereof is smaller than a diameter of a central portion (11a, 12a, 31ba, 32a) thereof so that a portion except for an edge of the body (123) is pressed in the full-width direction (W) of the cell (100).

17. The apparatus of claim 16, wherein an outer surface of each of both the side portions (11b, 12b, 31b, 32b) of the pressing roll (10, 20, 30) has a curvature that is rounded from the central portion (11a, 12a, 31a, 32a) toward the end.

18. The apparatus of claim 17, wherein, in the pressing roll (10, 20, 30), a curvature having a rounded shape formed on the outer surface of each of both the side portions (11b, 12b, 31b, 32b) has a curvature radius (R) of 5 mm to 50 mm.

19. The apparatus of claim 13, wherein the pressing roll (10, 20, 30) has a length smaller than a width of the body (123) so that a portion except for an edge of the body (123) is pressed in the full-width direction (W) of the cell (100).

20. The apparatus of claim 19, wherein the pressing roll (10, 20, 30) has the length that is smaller by 2 mm to 10 mm than the width of the body (123).

21. The apparatus of claim 13, wherein each of both the side portions (11b, 12b, 31b, 32b) of the pressing roll (10, 20, 30) is chamfered so that a portion except for an edge of the body (123) is pressed in the full-width direction (W) of the cell (100).

## Patentansprüche

1. Verfahren zum Herstellen einer Sekundärbatterie, wobei das Verfahren umfasst:
einen Aufnahmeprozess eines Aufnehmens einer Elektrodenanordnung (110), in welcher Elektroden und Separatoren alternierend gestapelt werden, eines Elektrolyten und eines Seitenabschnitts von Elektrodenleitungen (111, 112),
welche mit den Elektroden verbunden sind, in einem Beutel (120), um eine Zelle (100) zu bilden;
einen Aktivierungsprozess eines Ladens der Zelle (100), um die Zelle (100) zu aktivieren;
einen Pressprozess eines sequenziellen Pressens der Zelle (100) durch Presswalzen (10, 20, 30) nach dem Aktivierungsprozess, um die Zelle (100) zu walzpressen; und
einen Entgasungsprozess eines Ablassens eines internen Gases der Zelle (100) nach außen nach dem Pressprozess,
**dadurch gekennzeichnet, dass**, in dem Pressprozess, ein Körper (123) des Beutels (120), in welchem die Elektrodenanordnung (110) aufgenommen ist, gepresst wird, sodass ein Abschnitt abgesehen von einem Rand des Körpers (123) gepresst wird.

2. Verfahren nach Anspruch 1, wobei der Beutel (120) umfasst:
den Körper (123), in welchem ein Aufnahmeteil (121) gebildet ist, in welchem die Elektrodenanordnung (110) aufgenommen ist; und
einen Gastaschenteil (122), welcher sich von dem Aufnahmeteil (121) erstreckt, um Gas zu sammeln, welches in dem Aufnahmeteil (121) gebildet wird,
wobei der andere Seitenabschnitt von jeder der Elektrodenleitungen (111, 112) aufgenommen wird, um zu dem Äußeren des Beutels (120) hervorzustehen, und der Gastaschenteil (122) sich in einer vollen Weitenrichtung (W) der Zelle (100) erstreckt, welche senkrecht zu der Richtung des Vorstehens der Elektrodenleitung (111, 112) ist.

3. Verfahren nach Anspruch 2, wobei, in dem Pressprozess, nachdem die Zelle (100) zwischen dem Paar von Presswalzen (10, 20, 30) angeordnet wird, das Paar von Presswalzen (10, 20, 30) sequenziell beide Flächen der Zelle (100) presst.

4. Verfahren nach Anspruch 2, wobei, in dem Aufnahmeprozess, der andere Seitenabschnitt der Elektrodenleitung (111, 112) aufgenommen wird, um zu dem Äußeren des Beutels (120) hervorzustehen, und
in dem Pressprozess das Walzpressen in einer vollen Längenrichtung (T) der Zelle (100) durchgeführt wird, welche die Richtung eines Vorstehens der Elektrodenleitung (111, 112) ist.

5. Verfahren nach Anspruch 4, wobei, in dem Pressprozess, das Pressen abgesehen von dem Rand des Körpers (120) in der vollen Weitenrichtung (W) der Zelle (100) durchgeführt wird.

6. Verfahren nach Anspruch 5, wobei, in dem Pressprozess, jede Presswalze (10, 20, 30) gebildet ist, sodass ein Durchmesser von jedem von beiden Seitenabschnitten (11b, 12b, 31b, 32b) davon kleiner ist als ein Durchmesser eines zentralen Abschnitts (11a, 12a, 31a, 32a) davon.

7. Verfahren nach Anspruch 6, wobei, in dem Pressprozess, jeder von beiden Seitenabschnitten (11b, 12b, 31b, 32b) der Presswalze (10, 20, 30) gebildet ist, um einen Durchmesser aufzuweisen, welcher zu einem Ende davon graduell kleiner wird.

8. Verfahren nach Anspruch 7, wobei, in dem Pressprozess, eine Außenfläche von jedem von beiden Seitenabschnitten (11b, 12b, 31b, 32b) der Presswalze (10, 20, 30) eine Krümmung aufweist, welche von dem zentralen Abschnitt (11a, 12a, 31a, 32a) zu dem Ende abgerundet ist.

9. Verfahren nach Anspruch 5, wobei, in dem Pressprozess, eine Länge der Presswalze (10, 20, 30) bereitgestellt ist, um kleiner als eine Weite des Körpers (123) zu sein.

10. Verfahren nach Anspruch 5, wobei, in dem Pressprozess, jeder von beiden Seitenabschnitten (11b, 12b, 31b, 32b) der Presswalze (10, 20, 30) abgeschrägt ist.

11. Verfahren nach Anspruch 1, ferner umfassend einen Alterungsprozess eines Zulassens, dass die Zelle (100) für eine vorbestimmte Zeit altert,
wobei der Pressprozess während dem Alterungsprozess durchgeführt wird.

12. Vorrichtung zum Herstellen einer Sekundärbatterie, wobei die Vorrichtung umfasst:
eine Presswalze (10, 20, 30), welche dazu eingerichtet ist, eine Zelle (100), in welcher eine Elektrodenanordnung (110), in welcher Elektroden und Separatoren alternierend gestapelt sind, und ein Elektrolyt in einem Beutel (120) aufgenommen sind, sequenziell zu walzpressen vor einem Entgasungsprozess nach einem Aktivierungsprozess in einem Herstellungsprozess der Sekundärbatterie; und
eine Stütze (13, 14), welche dazu eingerichtet ist, die Presswalze (10, 20, 30) zu stützen,
wobei die Presswalze (10, 20, 30) einen Körper (123) des Beutels (12ä) presst, in welchem die Elektrodenanordnung (110) aufgenommen ist, sodass ein Abschnitt außer einem Rand des Körpers (123) gepresst ist.

13. Vorrichtung nach Anspruch 12, wobei der Beutel (120) umfasst:
den Körper (123), in welchem ein Aufnahmeteil (121) gebildet ist, in welchem die Elektrodenanordnung (110) aufgenommen ist; und
einen Gastaschenteil (122), welcher sich von dem Aufnahmeteil (121) erstreckt, um Gas zu sammeln, welches in dem Aufnahmeteil (121) gebildet ist,
wobei die Elektrodenanordnung (110) ferner eine Elektrodenleitung (111, 112) umfasst, welche einen Seitenabschnitt aufweist, welcher mit jeder von den Elektroden verbunden ist, und wobei der andere Seitenabschnitt zu dem Äußeren des Beutels (120) hervorsteht, und
der Gastaschenteil (122) sich in einer vollen Weitenrichtung (W) der Zelle (100) erstreckt, welche senkrecht zu einer Richtung eines Hervorstehens der Elektrodenleitung (111, 112) ist.

14. Vorrichtung nach Anspruch 13, wobei die Presswalze (10, 20, 30) als ein Paar bereitgestellt ist, und
nachdem die Zelle (100) zwischen dem Paar von Presswalzen (10, 20, 30) angeordnet ist, beide Flächen der Zellen (100) sequenziell gepresst werden.

15. Vorrichtung nach Anspruch 13, wobei die Presswalze (10, 20, 30) die Zelle (100) in einer vollen Längenrichtung (T) der Zelle (100) walzpresst, welche die Richtung des Hervorstehens der Elektrodenleitung (111, 112) ist.

16. Vorrichtung nach Anspruch 15, wobei, in der Presswalze (10, 20, 30), ein Durchmesser von jedem von beiden Seitenabschnitten (11b, 12b, 31b, 32b) davon kleiner ist als ein Durchmesser eines Zentralabschnitts (11a, 12a, 31ba, 32a) davon, sodass ein Abschnitt außer einem Rand des Körpers (123) in der vollen Weitenrichtung (W) der Zelle (100) gepresst ist.

17. Vorrichtung nach Anspruch 16, wobei eine Außenfläche von jedem von beiden Seitenabschnitten (11b, 12b, 31b, 32b) der Presswalze (10, 20, 30) eine Krümmung aufweist, welche von dem Zentralabschnitt (11a, 12a, 31a, 32a) zu dem Ende abgerundet ist.

18. Vorrichtung nach Anspruch 17, wobei, in der Presswalze (10, 20, 30), eine Krümmung, welche eine abgerundete Form aufweist, welche an der Außenfläche von jedem von beiden Seitenabschnitten (11b, 12b, 31b, 32b) gebildet ist, einen Krümmungsradius (R) von 5 mm bis 50 mm aufweist.

19. Vorrichtung nach Anspruch 13, wobei die Presswalze (10, 20, 30) eine Länge kleiner als eine Weite des Körpers (123) aufweist, sodass ein Abschnitt außer einem Rand des Körpers (123) in der vollen Weitenrichtung (W) der Zelle (100) gepresst ist.

20. Vorrichtung nach Anspruch 19, wobei die Presswalze (10, 20, 30) eine Länge aufweist, welche um 2 mm bis 10 mm kleiner ist als die Weite des Körpers (123).

21. Vorrichtung nach Anspruch 13, wobei jeder von beiden Seitenabschnitten (11b, 12b, 31b, 32b) der Presswalze (10, 20, 30) abgeschrägt ist, sodass ein Abschnitt außer einem Rand des Körpers (123) in der vollen Weitenrichtung (W) der Zelle (100) gepresst ist.

## Revendications

1. Procédé pour fabriquer une batterie secondaire, le procédé comprenant :
un procédé de réception consistant à recevoir un ensemble d'électrodes (110), dans lequel des électrodes et des séparateurs sont empilés alternativement, un électrolyte, et une portion latérale de languettes d'électrode (111, 112) connectées aux électrodes, dans une poche (120) pour former un élément (100) ;
un procédé d'activation consistant à charger l'élément (100) pour activer l'élément (100) ;
un procédé de pressage consistant à presser de manière séquentielle l'élément (100) par l'intermédiaire de rouleaux presseurs (10, 20, 30) après le procédé d'activation pour soumettre à un pressage par rouleaux l'élément (100) ; et
un procédé de dégazage consistant à évacuer un gaz interne de l'élément (100) vers l'extérieur après le procédé de pressage,
**caractérisé en ce que**, dans le procédé de pressage, un corps (123) de la poche (120), dans laquelle l'ensemble d'électrodes (110) est reçu, est pressé de façon à ce qu'une portion à l'exception d'un bord du corps (123) soit pressée.

2. Procédé selon la revendication 1, dans lequel la poche (120) comprend :
le corps (123) dans lequel une partie de réception (121), dans laquelle l'ensemble d'électrodes (110) est reçu, est formée ; et
une partie poche de gaz (122) s'étendant à partir de la partie de réception (121) pour collecter un gaz généré dans la partie de réception (121),
dans lequel l'autre portion latérale de chacun des languettes d'électrode (111, 112) est reçue pour faire saillie vers l'extérieur de la poche (120), et la partie poche de gaz (122) s'étend dans une direction de largeur totale (W) de l'élément (100), qui est perpendiculaire à la direction de saillie de la languette d'électrode (111, 112).

3. Procédé selon la revendication 2, dans lequel, dans le procédé de pressage, après que l'élément (100) a été disposé entre la paire de rouleaux presseurs (10, 20, 30), la paire de rouleaux presseurs (10, 20, 30) presse de manière séquentielle les deux surfaces de l'élément (100).

4. Procédé selon la revendication 2, dans lequel, dans le procédé de réception, l'autre portion latérale de la languette d'électrode (111, 112) est reçue pour faire saillie vers l'extérieur de la poche (120), et
dans le procédé de pressage, un pressage par rouleaux est réalisé dans une direction de pleine longueur (T) de l'élément (100), qui est la direction de saillie de la languette d'électrode (111, 112).

5. Procédé selon la revendication 4, dans lequel, dans le procédé de pressage, le pressage est réalisé à l'exception du bord du corps (120) dans la direction de pleine largeur (W) de l'élément (100).

6. Procédé selon la revendication 5, dans lequel, dans le procédé de pressage, chacun des rouleaux presseurs (10, 20, 30) est formé de façon à ce qu'un diamètre de chacune des deux portions latérales (11b, 12b, 31b, 32b) de celui-ci soit plus petit qu'un diamètre d'une portion centrale (11a, 12a, 31a, 32a) de celui-ci.

7. Procédé selon la revendication 6, dans lequel, dans le procédé de pressage, chacune des deux portions latérales (11b, 12b, 31b, 32b) du rouleau presseur (10, 20, 30) est formée pour avoir un diamètre qui est progressivement plus petit vers une extrémité de celui-ci.

8. Procédé selon la revendication 7, dans lequel, dans le procédé de pressage, une surface extérieure de chacune des deux portions latérales (11b, 12b, 31b, 32b) du rouleau presseur (10, 20, 30) a une courbure qui est arrondie à partir de la portion centrale (11a, 12a, 31a, 32a) vers l'extrémité.

9. Procédé selon la revendication 5, dans lequel, dans le procédé de pressage, une longueur du rouleau presseur (10, 20, 30) est fournie pour être plus petite qu'une largeur du corps (123).

10. Procédé selon la revendication 5, dans lequel, dans le procédé de pressage, chacune des deux portions latérales (11b, 12b, 31b, 32b) du rouleau presseur (10, 20, 30) est chanfreinée.

11. Procédé selon la revendication 1, comprenant en outre un procédé de vieillissement consistant à permettre à l'élément (100) d'attendre pendant un temps prédéterminé, dans lequel le procédé de pressage est réalisé durant le procédé de vieillissement.

12. Appareil pour fabriquer une batterie secondaire, l'appareil comprenant :
un rouleau presseur (10, 20, 30) configuré pour soumettre à un pressage par rouleaux de manière séquentielle un élément (100), dans lequel un ensemble d'électrodes (110), dans lequel des électrodes et des séparateurs sont empilés alternativement, et un électrolyte sont reçus dans une poche (120) avant un procédé de dégazage après un procédé d'activation dans un procédé de fabrication de la batterie secondaire ; et
un support (13, 14) configuré pour supporter le rouleau presseur (10, 20, 30),
dans lequel le rouleau presseur (10, 20, 30) presse un corps (123) de la poche (12à), dans laquelle l'ensemble d'électrodes (110) est reçu, de façon à ce qu'une portion à l'exception d'un bord du corps (123) soit pressée.

13. Appareil selon la revendication 12, dans lequel la poche (120) comprend :
le corps (123) dans lequel une partie de réception (121), dans laquelle l'ensemble d'électrodes (110) est reçu, est formée ; et
une partie poche de gaz (122) s'étendant à partir de la partie de réception (121) pour collecter un gaz généré dans la partie de réception (121),
dans lequel l'ensemble d'électrodes (110) comprend en outre une languette d'électrode (111, 112) ayant une portion latérale connectée à chacune des électrodes et l'autre portion latérale faisant saillie vers l'extérieur de la poche (120), et
la partie poche de gaz (122) s'étend dans une direction de pleine largeur (W) de l'élément (100), qui est perpendiculaire à une direction de saillie de la languette d'électrode (111, 112).

14. Appareil selon la revendication 13, dans lequel le rouleau presseur (10, 20, 30) est fourni par paire, et
après que l'élément (100) a été disposé entre la paire de rouleaux presseurs (10, 20, 30), les deux surfaces des éléments (100) sont pressées de manière séquentielle.

15. Appareil selon la revendication 13, dans lequel le rouleau presseur (10, 20, 30) soumet à un pressage par rouleaux l'élément (100) dans une direction de pleine longueur (T) de l'élément (100), qui la direction de saillie de la languette d'électrode (111, 112).

16. Appareil selon la revendication 15, dans lequel, dans le rouleau presseur (10, 20, 30), un diamètre de chacune des deux portions latérales (11b, 12b, 31b, 32b) de celui-ci est plus petit qu'un diamètre d'une portion centrale (11a, 12a, 31ba, 32a) de celui-ci de façon à ce qu'une portion à l'exception d'un bord du corps (123) soit pressée dans la direction de pleine largeur (W) de l'élément (100).

17. Appareil selon la revendication 16, dans lequel une surface extérieure de chacune des deux portions latérales (11b, 12b, 31b, 32b) du rouleau presseur (10, 20, 30) a une courbure qui est arrondie à partir de la portion centrale (11a, 12a, 31a, 32a) vers l'extrémité.

18. Appareil selon la revendication 17, dans lequel, dans le rouleau presseur (10, 20, 30), une courbure ayant une forme arrondie formée sur la surface extérieure de chacune des deux portions latérales (11b, 12b, 31b, 32b) a un rayon de courbure (R) de 5 mm à 50 mm.

19. Appareil selon la revendication 13, dans lequel le rouleau presseur (10, 20, 30) a une longueur plus petite qu'une largeur du corps (123) de façon à ce qu'une portion à l'exception d'un bord du corps (123) soit pressée dans la direction de pleine largeur (W) de l'élément (100).

20. Appareil selon la revendication 19, dans lequel le rouleau presseur (10, 20, 30) a la longueur qui est plus petite de 2 mm à 10 mm que la largeur du corps (123).

21. Appareil selon la revendication 13, dans lequel chacune des deux portions latérales (11b, 12b, 31b, 32b) du rouleau presseur (10, 20, 30) est chanfreinée de façon à ce qu'une portion à l'exception d'un bord du corps (123) soit pressée dans la direction de pleine largeur (W) de l'élément (100).
